# EUROPÄISCHE PATENTANMELDUNG

(11) **EP 4 219 197 A1**
(43) Veröffentlichungstag der Anmeldung: **02.08.2023**
(21) Anmeldenummer: 22216648.0
(22) Anmeldetag: 23.12.2022
(51) Int. Cl.: B60G 21/05, B62K 27/06

(54) **BEFÖRDERUNGSMITTEL UND DAFÜR VORGESEHENE KOPPELLENKERACHSE**

(30) Priorität: 27.01.2022 DE 202022100469 U; 27.01.2022 DE 102022000365
(71) Anmelder: Croozer GmbH, 50354 Hürth (DE)
(72) Erfinder: THIEL, Karl, 22763 Hamburg (DE)
(74) Vertreter: Lenzing Gerber Stute

(57) **Zusammenfassung**

Beförderungsmittel, insbesondere Anhänger für ein Fahrrad oder ein Pedelec, mit einem Chassis mit einer Koppellenkerachse, wobei die Koppellenkerachse mindestens zwei Schwingen aufweist, die jeweils ein Schwingenlager und mindestens eine Aufnahme zur Montage einer Radachse aufweisen derart, dass die Radachsen um eine durch die Schwingenlager definierte Drehachse herum verschwenkbar montiert werden können, wobei die Schwingen über mindestens einen Koppellenker miteinander verbunden sind, wobei mindestens ein zwischen den Schwingen liegender Teil des Koppellenkers radial von der Drehachse beabstandet ist und wobei die Koppellenkerachse derart ausgestaltet ist, dass die Unterseite des Chassis bzw. Fahrzeugboden unterhalb der Aufnahmen zur Montage der Radachsen liegen kann.

## Beschreibung

Die vorliegende Erfindung betrifft ein Beförderungsmittel, insbesondere einen Anhänger für ein Fahrrad oder ein Pedelec, mit einem Chassis mit einer Koppellenkerachse, wobei die Koppellenkerachse mindestens zwei Schwingen aufweist, die jeweils ein Schwingenlager und mindestens eine Aufnahme zur Montage einer Radachse aufweisen derart, dass die Radachsen um eine durch die Schwingenlager definierte Drehachse herum verschwenkbar montiert werden können, und wobei die Schwingen über mindestens einen zumindest teilweise radial zur Drehachse beabstandeten Koppellenker miteinander verbunden sind,. Die Erfindung betrifft auch eine Koppellenkerachse für einen Anhänger für ein Fahrrad oder ein Pedelec.

Fahrradanhänger, wie sie für Kinder-, Lasten-, und Tiertransport Verwendung finden, sind Leichtbaufahrzeuge und gehören zu den Fahrzeugen, an denen häufig Räder mit großen Laufraddurchmessern im Verhältnis zu den Fahrzeugabmessungen Verwendung finden. Am häufigsten sind Einachsanhänger mit zwei Rädern. Bei einfacher, ungefederter Ausführung befindet sich ein Achsrohr unter dem Chassis, an dessen beiden Enden sich Aufnahmebuchsen für Steckachsen mit Druckknopfverriegelung befinden, wie sie zur einfachen Montage und Demontage von einseitig befestigten Laufrädern üblich sind. Die Chassis-Unterseite befindet sich bei Verwendung eines Achsrohres mindestens im Abstand des Laufradradius über der Fahrbahn. Es sind aber auch Fahrradanhänger erhältlich, bei denen die Aufnahmebuchsen ohne Achsrohr direkt am Chassis befestigt werden, wodurch die Chassisunterseite tiefer gelegt werden kann. Soll die Chassisunterseite noch tiefer gelegt und auch noch gefederte Radaufhängungen verwendet werden, ergeben sich erhöhte mechanische Anforderungen bezüglich der Maßhaltigkeit und Verwindungssteifheit des Chassis, einerseits um die eingebrachten Transportlasten und die daraus resultierenden dynamischen Belastungen ohne Aufgabe des Leichtbauprinzips abtragen zu können und andererseits, um das Eigenlenkverhalten der Radaufhängungen, vor allem bezogen auf das Spur- und Sturzverhalten des Fahrzeugs während des Betriebs innerhalb des tolerierbaren Rahmens zu begrenzen. Eine besondere Herausforderung besteht an den konstruktiven Leichtbau, wenn ein solches tiefliegendes Chassis eine durchgehende Ladefläche haben soll, gefedert, gebremst oder sogar motorisiert sein soll.

Seitens der Regulatorik in der EU wird derzeit das zulässige Gesamtgewicht eines ungebremsten Fahrradanhängers auf 60 kg beschränkt. Da im Konsumentenbereich nahezu ausschließlich ungebremste Fahrradanhänger verwendet werden, haben sich die konstruktiven Anforderungen an die dynamische Festigkeit und Stabilität eines Chassis eines Fahrradanhängers auf dieses Maximalgewicht bezogen.

Unter der Voraussetzung, dass der Anhänger über eine Betriebsbremse z.B. in Verbindung mit einem eigenen motorischen Antrieb verfügt, ist eine weitere Auflastung des Anhängers bzw. eine erhebliche Ausweitung des Gesamtgewichts z.B. auf das Doppelte des jetzt geltenden Gesamtgewichts für ungebremste Anhänger ohne weiteres möglich. Mit dieser Auflastung ergeben sich jedoch erhebliche Anstrengungen, die konstruktive Auslegung des Chassis so zu gestalten, dass zum einen das Fahrzeuggewicht weiterhin sehr niedrig bleibt, und zum anderen die dynamisch auftretenden Lasten und Kräfte betriebssicher abgetragen werden.

Es ist im Rahmen des Leichtbaus insbesondere aus Gewichtsgründen nicht erstrebenswert, das üblicherweise aus Rohren gefertigte Chassis sehr steif auszulegen, wenn mit einer ausgewogenen elastischen Verformung der Rahmenkonstruktion die sichere Aufnahme und Abtragung der Betriebslasten ebenfalls erreicht werden kann.

Aus Gründen der Schwerpunktlage, aber auch eines bequemen Einstiegs und eines möglichst großen Innenraums ist es daher von Vorteil, die Ladefläche des Fahrzeugs und damit den Boden des Chassis möglichst weit abzusenken. Je tiefer der Fahrzeugboden abgesenkt wird, desto herausfordernder wird die Konstruktion des Achsapparates, da mit dem größeren Abstand der Radachse zum Unterboden (bei gleichbleibender Radgröße, z.B. 20°) auch die Hebelkräfte, die auf die Radachse in axialer Richtung wirken, größer werden.

Werden die Räder über Radaufnahmebuchsen einzeln seitlich am Chassis befestigt, werden alle in Längsrichtung, Quer- und Hochrichtung auftretenden Kräfte und Momente allein über diese Radaufnahmebuchsen in das Chassis übertragen. Hier sind erhebliche Verstärkungen erforderlich, um jegliches unerwünschtes Eigenlenkverhalten oder sonstige unerwünschte Veränderungen der Radführungen zu vermeiden. Soll das Fahrzeug zudem noch gefedert werden, kommen in der Regel Starr- oder Halbstarrachsen mit geschobenen oder gezogenen Schwingen zum Einsatz, die mit einem unter dem Fahrzeugboden angeordneten Drehstab als Querlenker verbunden sind. Eine derartige Konstruktion ist beispielsweise aus der DE 10 2013 109 230 A1 bekannt.

Diese einfache und kostengünstige Ausführung hat jedoch den Nachteil, dass einerseits ein ausreichend dimensionierter Drehstab unter dem Fahrzeugboden angeordnet werden muss, der die Bodenfreiheit einschränkt, andererseits je nach Tiefe des Chassisbodens der Drehstab mit den Schwingen sehr tief liegt, was bedeutet, dass entweder die Schwingen, an deren Ende die Laufräder eingesetzt werden unverhältnismäßig lang werden oder in einem so steilen Winkel zum Boden des Fahrzeugs stehen, dass eine komfortable Federung nicht mehr erzielbar ist.

Koppellenkerachsen gehören zu den Halbstarrachsen, bei denen Längslenker oder Schwingen für die Radaufnahme mit biegesteifen, aber drehweichen Rohren oder Profilen verbunden sind, weshalb solche Achskörper als Verbundlenker- oder auch Koppellenkerachsen bezeichnet werden. Diese Verbindungsteile erfüllen bei den Koppellenkerachsen die Funktion eines Stabilisators. Koppellenkerachsen können preiswert mit Gummilagern am Fahrzeugchassis befestigt werden und stellen geringe Anforderungen an die Präzision der Lagerstellen bei geringen Fertigungskosten, weshalb dieses Konstruktionsprinzip insbesondere im Automobilbau verbreitete Anwendung findet.

Die vorbekannten Koppellenkerachsen gestatten jedoch keine tiefliegenden Chassis-Konstruktionen und eine damit einhergehende niedrige Flurhöhe des Fahrzeugs zwischen den Lagern des Achskörpers.

Gattungsgemäße Koppellenkerachsen sind im Übrigen insbesondere aus dem Kraftfahrzeugbau bekannt, so aus der DE 195 07 397 A1.

Die der Erfindung zugrunde liegende Aufgabe besteht darin, ein Beförderungsmittel, insbesondere ein Leichtbau-Beförderungsmittel wie beispielsweise einen Anhänger für ein Fahrrad oder ein Pedelec, mit einer Radaufhängung bereitzustellen, bei der die genannten Nachteile weniger oder gar nicht bestehen.

Diese Aufgabe wird bei einem Beförderungsmittel mit den Merkmalen des Anspruchs 1 sowie mit einer Koppellenkerachse mit den Merkmalen des Anspruchs 5 gelöst. Merkmale vorteilhafter Ausgestaltungen der Erfindung ergeben sich aus den davon abhängigen Unteransprüchen.

Unter einer durch die Schwingenlager definierten Drehachse ist hier und im Folgenden die Achse gemeint, um die sich die Schwingen drehen, wenn die Schwingenlagerachsen miteinander fluchten. Sind sie schräg zueinander gestellt, ist unter der Drehachse die geometrische Ache zu verstehen, die die jeweiligen Mittelpunkte der Schwingenlager miteinander verbindet.

Unter einer Rotationsebene wird hier und im Folgenden eine zur Drehachse orthogonale Ebene verstanden.

Unter einem zwischen den Schwingen liegenden Teil des Koppellenkers wird insbesondere ein Teil des Koppellenkers verstanden, der sich zwischen den Schwingen befindet und der den geringsten Abstand zwischen dem Koppellenker und der (geometrischen) Drehachse hat. Dieser Abstand wird als maßgeblich für den Abstand zwischen Koppellenker und der Unterseite eines Beförderungsmittels (Fahrzeug oder Fahrzeuganhänger) angesehen, vor allem dann, wenn die Unterseite des Chassis durchgängig flächig ist und im Wesentlichen horizontal verläuft. Werden mehrere Koppellenker eingesetzt, ist der Koppellenker maßgeblich, der einen zwischen den Schwingen liegenden Teil aufweist, der zur Drehachse am nächsten ist.

Unter einer Aufnahme zur Montage einer Radachse wird insbesondere eine Aufnahme für einen ein oder mehrere Räder tragenden Achszapfen, aber auch eine Aufnahme für einen Radträger für ein oder mehrere in Fahrtrichtung hintereinander angeordnete Räder verstanden.

Das erfindungsgemäße Beförderungsmittel weist eine Koppellenkerachse auf, die derart ausgestaltet ist, dass die Unterseite des Chassis des Beförderungsmittels bzw. die Unterseite des Fahrzeugbodens unterhalb der Aufnahme zur Montage der Radachsen liegen kann. Durch einen derartigen Achsapparat mit durch mindestens einen Koppellenker miteinander verbundenen Schwingen können die Vorteile einer komfortablen Federung durch Schwingen trotz eines geringen Abstandes der Unterseite zur Fahrbahn beibehalten werden, während die dynamisch auftretenden Lasten und Kräfte betriebssicher abgetragen werden. Insbesondere kann ein wesentlicher Teil der Unterseite, durch den letztlich eine besonders tiefe Schwerpunktlage des unbeladenen und beladenen Beförderungsmittels erreichbar ist, unterhalb der Aufnahme zur Montage der Radachsen liegen. Vorzugsweise kann die gesamte Unterseite unterhalb der Aufnahmen liegen.

Grundsätzlich ist es von Vorteil, wenn die Koppellenkerachse an dem Beförderungsmittel so montiert ist, dass der Koppellenker in einer betriebsbereiten

Ruhelage nahezu senkrecht oder senkrecht, vorzugsweise in einem Winkelbereich von +/- 10° zur Senkrechten oder darüber hinaus bevorzugt in einem Winkelbereich von +/- 5° zur Senkrechten, unter dem Schwingenlager angeordnet ist. Dadurch wird erreicht, dass der Koppellenker im Wesentlichen in horizontaler Richtung ausgelenkt, wenn die Schwingen ausgelenkt werden. Bei entsprechender Anordnung kann dann die Aufnahme zur Montage einer Radachse sogar oberhalb der Höhe der Drehachse liegen, so dass der Abstand der Unterseite des Chassis bzw. Fahrzeugbodens des Beförderungsmittels zur Fahrbahn in einer betriebsbereiten Ruhelage deutlich geringer sein kann als der Radradius.

Eine besondere Ausgestaltung des erfindungsgemäßen Beförderungsmittels ist gekennzeichnet durch mindestens eine unterhalb der Unterseite des Chassis angeordnete Feder-Dämpfer-Kombination, die waagerecht auf die Schwingen wirkt, wobei die Feder-Dämpfer-Kombination insbesondere eine geschobene Feder-Dämpfer-Kombination und/oder eine gezogene Feder-Dämpfer-Kombination ist. Im Weiteren ist es vorteilhaft, wenn die Feder-Dämpferkombination oder deren Widerlager derart einstellbar ausgebildet sind, dass sich die Position des bzw. der Koppellenker in betriebsbereiter Ruhelage des Beförderungsmittels einstellen lässt, z. B. so, dass sich der mindestens eine Koppellenker im Wesentlichen senkrecht unterhalb der Drehachse der Schwingen befindet.

Zur Definition der Lage des Koppellenkers einer erfindungsgemäßen Koppellenkerachse für einen Anhänger für ein Fahrrad oder ein Pedelec zum Drehpunkt der Schwingen wird der Winkel zwischen einer zur Drehachse radialen Strecke, die den kürzesten Abstand von dem zwischen den Schwingen liegenden Teil des Koppellenkers zur Drehachse abbildet, und einer zur Drehachse radialen Geraden, die durch die durch die Aufnahmen zur Montage von Radachsen definierte Achse verläuft, bestimmt, indem die Strecke und die Gerade senkrecht in eine zur Drehachse orthogonalen Ebene, der Rotationsebene, projiziert werden. Dies ist insbesondere dann notwendig, wenn die Strecke und die Gerade nicht ohnehin bereits in ein und derselben zur Drehachse orthogonalen Ebene liegen.

Wenn der Winkel des mindestens einen Koppellenkers um einen Winkel von 60° bis 135° zur Aufnahme zur Montage einer Radachse an den Schwingen versetzt ist, sind die Richtungskomponenten der Bewegung der Aufnahme und die des Koppellenkers deutlich voneinander verschieden. So kann durch diesen Winkelversatz bei einer durch die Räder in die Schwinge eingebrachten, im Wesentlichen vertikalen Bewegung erreicht werden, dass die Richtung der Bewegung des Koppellenkers im Wesentlichen horizontal ist. Im Ergebnis kann somit bei geeigneter Montage an einem Anhänger für ein Fahrrad oder ein Pedelec erreicht werden, dass sich der Abstand des Koppellenkers zur Unterseite des Chassis bzw. des Fahrzeugbodens des Anhängers beim Einschwingen der Schwingen aus einer Ruhelage nur vergleichsweise gering ändert, wodurch Koppellenker und Unterseite in betriebsbereiter Ruhelage einen vergleichsweise geringen Abstand zueinander aufweisen können.

Die erfindungsgemäße Koppellenkerachse ermöglicht durch diese Anordnung nicht nur eine unabhängig von der Maßhaltigkeit oder Steifigkeit des Chassis präzise Längs- und Seitenführung der Laufräder, welche unerwünschtes Eigenlenkverhalten eliminiert, sondern erlaubt auch eine weitgehend parallel zum Untergrund verlaufende Anordnung von Drehpunkt und Achsaufnahme der seitlichen Federschwingen am Anhänger.

Der Winkel liegt vorzugsweise in einem Bereich von 75° oder 90° bis 120°, wobei bei einem Winkel von 90° eine Auslenkung der Schwinge durch ein Rad in vertikaler Richtung in eine Bewegung des Koppellenkers in horizontaler Richtung umgesetzt wird, so dass sich in diesem Fall der Abstand zwischen Koppellenker und Unterseite des Anhängers kaum verändert. Besonders vorteilhaft macht sich dieser Effekt bemerkbar, wenn der Abstand der Achsaufnahmen zum Drehpunkt der Schwingen größer ist, als der Abstand des Koppellenkers zum Drehpunkt. In diesem Verhältnis wird dann die im Wesentlichen senkrechte Bewegung der Radachse zur im Wesentlichen horizontale Schwenkachse des Koppellenkers untersetzt, d.h. die Auslenkung des Koppellenkers beim Einfedern des Rades ist kleiner als der Federweg des Rades.

Vorzugsweise kann ein Panhardstab mit einer der Schwingen verbunden sein, der dann mit dem Chassis des Anhängers verbunden werden kann, um die auf die Schwingen wirkende Seitenkräfte am Chassis abzustützen.

Der Koppellenker ist vorzugsweise ein gerader Stab, sodass ein Absenken der Unterseite des Chassis bzw. des Fahrzeugbodens des Anhängers gleichmäßig möglich ist und nicht durch einzelne Bereiche des Koppellenkers verhindert wird. Bei dieser Ausführung des Koppellenkers ist die Projektion der radialen Strecke, die den Koppellenker mit der Drehachse verbindet, entlang der gesamten Länge des Koppellenkers gleich.

In noch einer bevorzugten Ausgestaltung der Erfindung ist der bzw. sind die Koppellenker von der Drehachse radial beabstandet mit den Schwingen verbunden, sodass der Koppellenker vorteilhaft auch im Bereich seiner Anbindung bei einer Auslenkung der Schwingen eine nahezu horizontale Bewegung ausführt. Insbesondere sind der bzw. die Koppellenker mit den Schwingen lösbar verbunden. Dadurch können je nach Anforderungsprofil an die Koppellenkerachse unterschiedliche Koppellenker, beispielsweise aus unterschiedlichen Materialien oder auch unterschiedlichen Querschnitten, verwendet werden, oder aber sie können bei Beschädigung einfach ausgetauscht werden, so dass im Schadensfall nicht die gesamte Koppellenkerachse ausgetauscht werden muss. Um einen Austausch von Koppellenkern zu ermöglichen, können die Schwingen zum Einsetzen und Herausnehmen einer oder mehrerer Koppellenker jeweils eine bzw. mehrere demontierbare Lagerhalbschalen aufweisen.

Vorzugsweise weist der mindestens eine Koppellenker zur Erhöhung der Biegesteifigkeit ein gebogenes oder eckiges Querschnittsprofil auf. Ist der Koppellenker zumindest in einem Bereich mindestens einer Einspannstelle als Hohlprofil ausgeführt, ist es sinnvoll, das Hohlprofil dort mit einem oder mehreren Füllstücken zu stabilisieren.

Üblicherweise werden Koppellenker als längliche Stangen, Rohre oder Hohlprofile ausgebildet. Es ist möglich, die Koppellenker an ihren Enden in jeweils die gleiche Richtung gekröpft auszubilden, so dass sie ein gestrecktes U bilden. Mit den Enden kann der Koppellenker dann an den Schwingen befestigt werden. In einer anderen erfindungsgemäßen Ausbildung können die Schwingen im Bereich ihrer Drehachsen gekröpft ausgebildet sein, so dass sie jeweils einen abgewinkelten Schenkel haben, zwischen denen der oder die Koppellenker montiert werden.

Als erfindungsgemäße Beförderungsmittel kommen nicht nur Anhänger für Fahrräder oder Pedelecs in Betracht, sondern grundsätzlich auch solche mit niedriger Ladenflächenhöhe und großen Laufraddurchmessern, so beispielsweise Motorradanhänger, aber auch mehrspurige Lastenräder. Auch lässt sich das Chassis der erfindungsgemäßen Beförderungsmittel besonders gut in kleinen Transportkraftfahrzeugen mit Elektroantrieb als Hinterachse einsetzen, weil sich durch den Fortfall einer Auspuffanlage und durch die für kleine Transportkraftfahrzeuge typischen schmalen Radkästen eine sehr tiefe, durchgehende Ladefläche mit maximaler Breite erzielen lässt.

Nachfolgend werden mögliche Ausführungsformen des erfindungsgemäßen Beförderungsmittels mit der erfindungsgemäßen Koppellenkerachse anhand von Figuren näher erläutert.

Es zeigen
- Fig. 1: den schematischen Aufbau der erfindungsgemäßen Koppellenkerachse;
- Fig. 2: eine weitere Darstellung des schematischen Aufbaus der erfindungsgemäßen Koppellenkerachse an einem Chassis des erfindungsgemäßen Beförderungsmittels;
- Fig. 3: eine weitere Ausführungsform der erfindungsgemäßen Koppellenkerachse mit gekröpfter Schwinge;
- Fig. 4: eine weitere Ausführungsform der erfindungsgemäßen Koppellenkerachse mit geschraubter Montage von Koppellenker an den Schwingen.

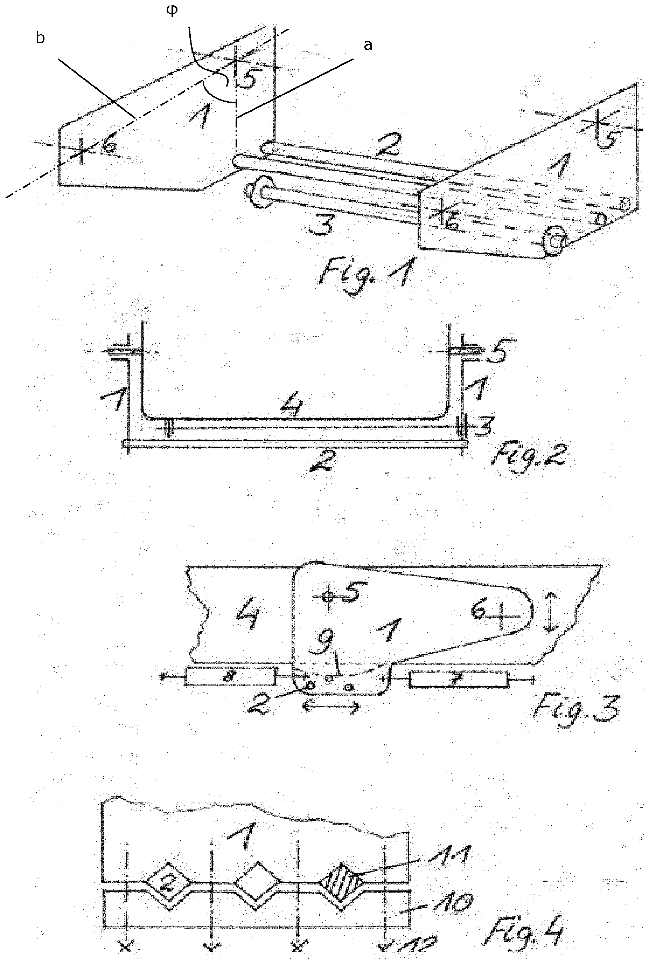

Fig. 1 und Fig. 2 zeigen schematisch den Aufbau einer erfindungsgemäßen Koppellenkerachse und deren Montage an einem Chassis **4** des erfindungsgemäßen Beförderungsmittels, das insbesondere ein Anhänger für ein Fahrrad oder ein Pedelec ist. Zwischen zwei am Chassis **4** mittels Schwingenlager **5** befestigten Schwingen **1** befinden sich senkrecht weit unterhalb der durch die Schwingenachsen der Schwingenlager **5** definierten Drehachse am Chassis **4** Koppellenker **2,** mit denen die Schwingen **1** verbunden sind. Die Koppellenker **2** bilden mit den hoch aufragenden Seiten der Schwingen **1** ein breites und tiefes U.

Die Strecke **a,** die den kürzesten Abstand zwischen der Drehachse und dem zur Drehachse nächstliegenden Koppellenker **2** definiert, und die Gerade **b,** die durch die Drehachse und die durch die Aufnahmen **6** der Schwingen **1** definierte Achse bzw. die durch die Aufnahme **6** einer Schwinge **1** verlaufende zentrale Achse verläuft, bilden einen Winkel ϕ, der im vorliegenden Beispiel etwa 90° beträgt.

Schwingen **1** und Koppellenker **2** können aus Metall, Kunststoff oder Holzverbundwerkstoffen gefertigt sein. Die Koppellenker **2** können als Rohre, Stabmaterial oder als Profile ausgebildet sein. Die Verbindung kann durch Schweißen, Pressung, Klebung, Laminieren oder Schraubmontage hergestellt werden.

In Fig. 3 sind die Koppellenker **2** anders als in den Figuren 1 und 2 mit einer gekröpften Schwinge **1** dargestellt. Der gestrichelte Kreisabschnitt **9** zeigt die nahezu waagerecht verlaufende Bewegung des oberen Koppellenkers **2,** der sich in Ruhelage senkrecht unter den Schwingenlagern **5** befindet, während die Aufnahmen **6** für die Radachsen am waagerechten Schwingenende auf und ab federn kann. Durch diese Anordnung kann bei einem geringen Abstand der Koppellenker **2** von der Chassis-Unterseite ein großer Federweg der Aufnahmen **6** für die Radachsen erzielt werden. Insbesondere ist in Fig. 3 erkennbar, dass die Unterseite des Chassis **4** unterhalb der Aufnahmen **6** für die Radachsen liegt und dadurch einen geringen Abstand zur Fahrbahn aufweisen kann. Selbiges ist bei der in Fig. 1 und Fig. 2 dargestellten Ausführungsform der Fall.

Die Koppellenker können beispielsweise als Hohlprofile, aber insbesondere auch als im Querschnitt gebogene oder gekantete Bleche ausgeführt sein. Auf diese Weise lässt sich die Biegesteifigkeit der Konstruktion erhöhen, ohne die Tordierbarkeit einzuschränken. Durch die biegesteife Ausführung der Koppellenkerachse lässt sich diese ohne weiteres mit elastischen Schwingenlagern **5** oder mit Gelenklagern, wie sie z.B. in der DIN ISO 12240-1 aufgeführt sind, am Chassis **4** befestigen, ohne dass dessen Verformung oder etwaige Fluchtungsfehler der Lager Spur und Sturz der Koppellenkerachse beeinflussen.

Im Falle einer elastischen Lagerung lässt sich die axiale Führung der Koppellenkerachse einfach und preiswert mit einem Panhardstab **3,** wie in Fig. 2 dargestellt, bewirken. Bei Verwendung von Gelenklagern empfiehlt sich eine Anordnung mit Fest- und Loslager, ein Panhardstab wird nicht benötigt. Der verständlicheren Darstellung wegen sind in Fig. 2 Koppellenker **2** und Panhardstab **3** übereinander dargestellt, statt wie in den Fig. 1, 3 und 4 waagerecht nebeneinander.

Fig. 3 zeigt außerdem eine Anordnung von geschobener Feder-Dämpfer-Kombination **7** und gezogener Feder-Dämpfer-Kombination **8** unterhalb der Chassisunterseite. Damit lassen sich Schwingen **1** und Laufräder sehr eng an das Chassis **4** bauen. Soll das Beförderungsmittel mit Radkästen ausgestattet sein, lassen sich auch sehr enge, platzsparende Radkästen realisieren, weil innerhalb des Radkastens keine Dämpfungs- und Federungselemente untergebracht werden müssen. Damit ist die gekröpfte Koppellenkerachse auch besonders für kleine Transport-Kraftfahrzeuge mit Elektroantrieb als Hinterachse geeignet, weil durch den Fortfall der Auspuffanlage und die schmalen Radkästen sich eine sehr tiefe, durchgehende Ladefläche mit maximaler Breite erzielen lässt, was dem gewerbetreibenden Fahrzeugnutzer sehr nützlich erscheinen dürfte.

Ein Beispiel für eine geschraubte Montage von Koppellenkern **2** an den Schwingen **1** ist in Fig. 4 dargestellt. Zwischen einer unteren Lagerschale **10** und der eine obere Lagerschale ausbildenden Schwinge **1** sind die Koppellenker **2,** beispielhaft Quadratrohre, mittels Schrauben **12** eingespannt. Um bei dünnen Wandstärken bei aus einem Hohlprofil bestehenden Koppellenkern **2** eine unerwünschte Verformung unter Last zu vermeiden und ausreichend Einspannkraft durch die Klemmvorrichtung sicherzustellen, sind im eingespannten Bereich des Hohlprofils Füllstücke **11** vorgesehen, die beispielsweise in die offenen Stirnseiten des Hohlprofils eingepresst sein können.

### Bezugszeichen

- 1: Schwinge
- 2: Koppellenker
- 3: Panhardstab
- 4: Chassis
- 5: Schwingenlager
- 6: Aufnahme zur Montage einer Radachse
- 7: geschobene Feder-Dämpfer-Kombination
- 8: gezogene Feder-Dämpfer-Kombination
- 9: Kreisabschnitt
- 10: untere Lagerschale
- 11: Füllstücke
- 12: Schraube
- a: kürzeste Strecke zwischen Koppellenker und Drehachse
- b: Gerade durch Drehachse und Aufnahme für Radachsen
- ϕ: Winkel zwischen a und b

## Patentansprüche

1. Beförderungsmittel, insbesondere ein Anhänger für ein Fahrrad oder ein Pedelec, mit einem Chassis (4) mit einer Koppellenkerachse, wobei die Koppellenkerachse mindestens zwei Schwingen (1) aufweist, die jeweils ein Schwingenlager (5) und mindestens eine Aufnahme (6) zur Montage einer Radachse aufweisen derart, dass die Radachsen um eine durch die Schwingenlager definierte Drehachse herum verschwenkbar montiert werden können, und wobei die Schwingen (1) über mindestens einen zumindest teilweise radial zur Drehachse beabstandeten Koppellenker (2) miteinander verbunden sind, **dadurch gekennzeichnet, dass** die Koppellenkerachse derart ausgestaltet ist, dass die Unterseite des Chassis (4) bzw. Fahrzeugbodens unterhalb der Aufnahmen (6) zur Montage der Radachsen liegen kann.

2. Beförderungsmittel nach Anspruch 1, **dadurch gekennzeichnet, dass** der bzw. die Koppellenker (2) in betriebsbereiter Ruhelage des Beförderungsmittels unterhalb, insbesondere nahezu senkrecht oder senkrecht, vorzugsweise in einem Winkelbereich von +/- 10° zur Senkrechten oder darüber hinaus bevorzugt in einem Winkelbereich von +/- 5° zur Senkrechten, unter dem Schwingenlager (5) angeordnet sind.

3. Beförderungsmittel nach Anspruch 1 oder 2, **gekennzeichnet durch** mindestens eine unterhalb der Unterseite des Chassis (4) angeordnete Feder-Dämpfer-Kombination (7, 8), die waagerecht auf die Schwingen (1) wirkt, wobei die Feder-Dämpfer-Kombination (7, 8) insbesondere eine geschobene Feder-Dämpfer-Kombination (7) und/oder eine gezogene Feder-Dämpfer-Kombination (8) ist.

4. Beförderungsmittel nach Anspruch 3, **dadurch gekennzeichnet, dass** die Feder-Dämpferkombination oder deren Widerlager derart einstellbar ausgebildet sind, dass sich die Position des bzw. der Koppellenker (2) in betriebsbereiter Ruhelage des Beförderungsmittels einstellen lässt.

5. Koppellenkerachse für einen Anhänger für ein Fahrrad oder ein Pedelec gemäß den Merkmalen des Anspruchs 1, **dadurch gekennzeichnet, dass** die Projektion einer zur Drehachse radialen Strecke (a), die den kürzesten Abstand von dem zwischen den Schwingen liegenden Teil des Koppellenkers zur Drehachse abbildet, auf eine Rotationsebene der Drehachse mit einer Projektion einer zur Drehachse radialen Geraden (b), die durch die durch die Aufnahmen (6) der Schwingen (1) definierte Achse verläuft, auf die gleiche Rotationsebene einen Winkel (ϕ) einschließt, der nicht kleiner als 60° und nicht größer als 135° ist.

6. Koppellenkerachse nach Anspruch 5, **dadurch gekennzeichnet, dass** der Winkel (ϕ) zwischen 75° und 120° liegt und insbesondere 90° ist.

7. Koppellenkerachse nach einem der Ansprüche 5 oder 6, **dadurch gekennzeichnet, dass** der kürzeste Abstand des zwischen den Schwingen liegenden Teils des Koppellenkers (2) zur Drehachse kleiner ist als ein auf der Projektion der radialen Geraden (b) liegender Abstand von der Aufnahme (6) zur Drehachse.

8. Koppellenkerachse nach einem der Ansprüche 5 bis 7, **gekennzeichnet durch** einen mit einer der Schwingen (1) verbundenen Panhardstab (3).

9. Koppellenkerachse nach einem der Ansprüche 5 bis 8, **dadurch gekennzeichnet, dass** der bzw. die Koppellenker (2) ein gerader Stab sind.

10. Koppellenkerachse nach einem der Ansprüche 5 bis 9, **dadurch gekennzeichnet, dass** der bzw. die Koppellenker (2) von der Drehachse radial beabstandet mit den Schwingen (1) verbunden sind.

11. Koppellenkerachse nach einem der Anspruch 10, **dadurch gekennzeichnet, dass** der bzw. die Koppellenker (2) mit den Schwingen (1) lösbar verbunden sind.

12. Koppellenkerachse nach Anspruch 11, **dadurch gekennzeichnet, dass** die Schwingen (1) zum Einsetzen und Herausnehmen einer oder mehrerer Koppellenker (2) jeweils eine bzw. mehrere demontierbare Lagerhalbschalen (10) aufweisen.

13. Koppellenkerachse nach einem der Ansprüche 5 bis 12, **dadurch gekennzeichnet, dass** der mindestens eine Koppellenker (2) zur Erhöhung der Biegesteifigkeit ein gebogenes oder eckiges Querschnittsprofil aufweist.

14. Koppellenkerachse nach Anspruch 12 und 13, **dadurch gekennzeichnet, dass** der Koppellenker (2) zumindest in einem Bereich mindestens einer Einspannstelle des Koppellenkers (2) in die Lagerhalbschalen als Hohlprofil ausgeführt ist, wobei dort ein oder mehrere Füllstücke (11) in das Hohlprofil einbringbar sind.

15. Koppellenkerachse nach einem der Ansprüche 5 oder 14, **dadurch gekennzeichnet, dass** der Koppellenker (2) und/oder die Schwingen (1) gekröpft sind.
